# EUROPEAN PATENT APPLICATION

(11) **EP 2 482 197 A1**
(43) Date of publication of application: **01.08.2012**
(21) Application number: 09849757.1
(22) Date of filing: 25.09.2009
(51) Int. Cl.: G06F 15/177, G06F 15/173

(54) **INFORMATION PROCESSING DEVICE AND DEVICE SETTING SWITCHING METHOD**

(71) Applicant: Fujitsu Limited, Kawasaki-shi, Kanagawa 211-8588 (JP)
(72) Inventor: MOROSAWA, Atsushi, Kawasaki-shi Kanagawa 211-8588 (JP); ISHIZUKA, Takaharu, Kawasaki-shi Kanagawa 211-8588 (JP); OWAKI, Takeshi, Kawasaki-shi Kanagawa 211-8588 (JP); AKIU, Susumu, Kawasaki-shi Kanagawa 211-8588 (JP)
(74) Representative: Ward, James Norman
(86) International application number: PCT/JP2009/004881
(87) International publication number: WO 2011/036726

(57) **Abstract**

[Problems] According to an aspect of the embodiments of the invention, it is an object to provide an information processing apparatus capable of exchanging the processors without stopping data transfer between the processors and an external apparatus.

[Means for solving the Problems] According to an aspect of the embodiments of the invention, there is provided a method of switching internal settings in an information processing apparatus including a plurality of processors, a crossbar switch connected to the plurality of processors and having a first routing table and a second routing table used for routing between the plurality of processors and an external apparatus, and a management unit managing the plurality of processors. The method includes performing data communication with the external apparatus using the first routing table, when a configuration of the information processing apparatus is changed, updating configuration information in the second routing table, and instructing any one of the plurality of processors to switch the updated second routing table and the first routing table, and switching, by the processor instructed by the management unit, a routing table to be used for data communication from the first routing table to the updated second routing table.

## Description

### FIELD

The technique in this specification pertains to a technique on maintenance control in an information processing apparatus.

### BACKGROUND

There are servers that connect a plurality of CPUs (Central Processing Units) and an external apparatus through a crossbar.

The crossbar that connects the plurality of CPUs and the external apparatus includes a routing table indicating connection relationships between the individual CPUs and ports to which the CPUs are connected. For example, an arbiter in a crossbar performs arbitration while referring to the routing table in order to control data transfer in a server.

In the case of changing a system configuration, such as removing a CPU, attaching a CPU, etc., the server has updated a routing table in the crossbar to control data transfer between the CPUs and the external apparatus.

Documents disclosing a maintenance technique in an information processing apparatus includes the following.

### Citation List

### Patent Literature

Patent Literature 1: Japanese Laid-open Patent Publication No. 62-219058

### SUMMARY

### Problems to be solved by the invention

In an aspect of the embodiments of the present invention, in an information processing apparatus having a plurality of processors, it is an object of the present invention to provide an information processing apparatus capable of exchanging the processors without stopping data transfer between the processors and an external apparatus and without affecting the other partitions.

### Means for solving the Problems

In order to solve the above-described problem, according to an aspect of the embodiments of the present invention, there is provided a method of switching internal settings in an information processing apparatus including a plurality of processors, a crossbar switch connected to the plurality of processors and having a first routing table and a second routing table used for routing between the plurality of processors and an external apparatus, and a management unit managing the plurality of processors. The method includes performing, by the plurality of processors, data communication with the external apparatus using the first routing table, preparing connection information in the second routing table such that a processor to be removed becomes unconnected to the crossbar switch with respect to the second routing table; and when at least one processor is removed among the plurality of processors, switching a routing table to be used by the processor for data communication from the first routing table to the second routing table.

### Effects of the invention

According to an aspect of the embodiments of the present invention, it is possible for an information processing apparatus having a plurality of routing tables to perform data transfer of the other processors at the time of exchanging processors by performing data transfer using a routing table corresponding to a process of exchanging processors.

### BRIEF DESCRIPTION OF DRAWINGS

[FIG. 1] FIG. 1 is a conceptual diagram of an information processing apparatus according to the present embodiment.
[FIG. 2] FIG. 2 is a conceptual diagram of an information processing apparatus according to the present embodiment.
[FIG. 3] FIG. 3 is a flowchart illustrating switching of routing tables according to the present embodiment.
[FIG. 4] FIG. 4 is a diagram illustrating a routing table according to the present embodiment.
[FIG. 5] FIG. 5 is a diagram illustrating a routing table according to the present embodiment.
[FIG. 6] FIG. 6 is a conceptual diagram of flag information held by an access permission register according to the present embodiment.

### DESCRIPTION OF EMBODIMENTS

In the following, a description will be given of the present embodiment.

### Embodiments

### [1. Overview of information processing apparatus according to the present embodiment]

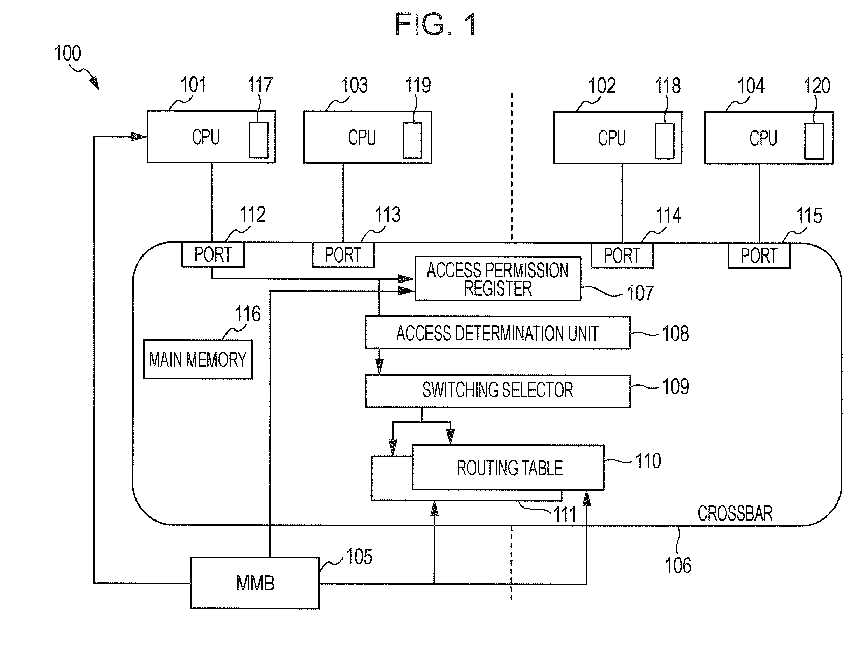

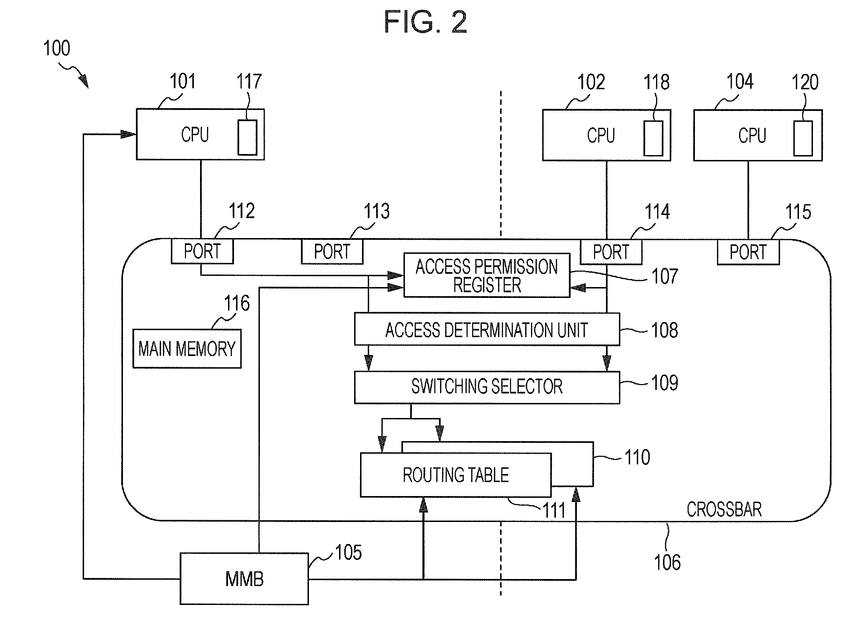

FIG. 1 and FIG. 2 are diagrams illustrating an information processing apparatus according to the present embodiment. An information processing apparatus 100 according to the present embodiment includes a plurality of CPUs 101, 102, 103, and 104, and is a processing apparatus capable of connecting to an external apparatus, such as a storage system, etc., through a crossbar. In the case of removing at least one CPU (for example, the CPU 103) among the CPUs 101, 102, 103, and 104, the information processing apparatus 100 according to the present embodiment updates one of routing tables 110 and 111 in a crossbar 106, that is to say, the routing table 111. And the information processing apparatus 100 performs data communication between the CPUs 101, 102, and 104, which have not been removed, and the storage system using the remaining routing table 110 together with updating the routing table 111. When the update of the routing table 111 is completed, a specific CPU (for example, the CPU 101) among the CPUs 101, 102, and 104 that have not been removed, switches the routing tables 110 and 111, and performs data communication using the updated routing table 111. Thereby, it is possible for the information processing apparatus 100 to switch internal settings in the information processing apparatus 100 efficiently without interrupting system operation.

In the following, a description will be given of a specific configuration and processing operation of the information processing apparatus 100 according to the present embodiment.

### [2. Configuration of information processing apparatus 100]

In the present embodiment, a description will be given of the case where the CPU 103 is removed from the information processing apparatus 100, and the CPU 101 switches the routing tables 110 and 111 in the crossbar 106. FIG. 1 is a diagram illustrating the information processing apparatus 100 before removing the CPU 103 from the information processing apparatus 100. FIG. 2 is a diagram illustrating the information processing apparatus 100 after removing the CPU 103 from the information processing apparatus 100.

The information processing apparatus 100 according to the present embodiment includes four CPUs 101, 102, 103, and 104, an MMB (Management Board) 105, a crossbar 106. The crossbar 106 includes an access permission register 107, an access determination unit 108, a switching selector 109, the routing tables 110 and 111, ports 112, 113, 114, and 115, and a main memory 116.

The CPU 101 is connected to the port 112 of the crossbar 106. The CPU 102 is connected to the port 114 of the crossbar 106. The CPU 103 is connected to the port 113 of the crossbar 106. Also, the CPU 104 is connected to the port 115 of the crossbar 106. And the routing tables 110 and 111 list connection relationships between the ports 112, 113, 114, and 115 of the crossbar 106 and the CPUs 101, 102, 103, and 104.

The MMB 105 is a unit that performs system management of the entire information processing apparatus 100. The MMB 105 includes a firmware, and the firmware performs power control of the information processing apparatus 100, and monitors of a temperature, a voltage, etc., of the information processing apparatus 100. Also, the MMB 105 updates the routing tables 110 and 111. In this regard, in the present embodiment, a redundant configuration is not applied to the routing table 110 and the routing table 111. At the time of removing the CPU 103, the MMB 105 does not update the routing table 110, but updates only the routing table 111. That is to say, during the update of the routing table 111, the information processing apparatus 100 uses the routing table 110 that is not updated for system operation. The information processing apparatus 100 updates the routing table 111 while using the routing table 110 for system operation.

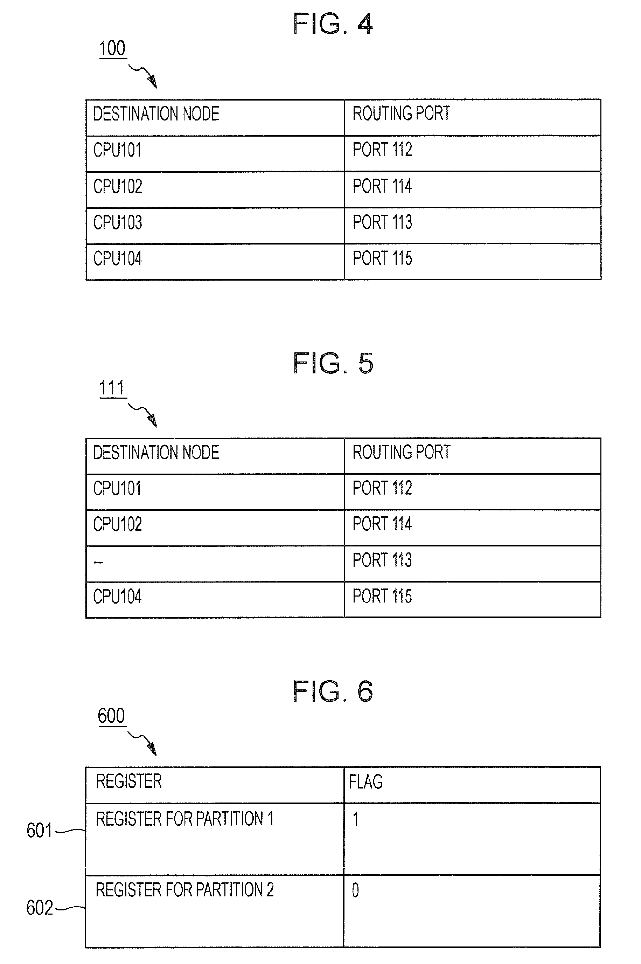

The access permission register 107 is a unit that holds a flag identifying a CPU that issues a switching instruction to the switching selector 109. To put it in another way, the access permission register 107 is a register storing a bit indicating which CPU issues a switching instruction to the switching selector 109. Specifically, the access permission register 107 holds flag information 600 illustrated in FIG. 6.

The access determination unit 108 is a unit for determining whether the CPUs 101, 102, 103, and 104 are accessible to the switching selector 109. The access determination unit 108 refers to the access permission register 107 to determine whether the CPUs 101, 102, 103, and 104 are accessible to the switching selector 109. A CPU to which the access determination unit 108 has given access permission, for example, the CPU 101, accesses the switching selector 109, and requests the switching selector 109 to switch the routing tables 110 and 111.

The switching selector 109 is a unit for switching the routing tables 110 and 111. When the switching selector 109 receives a request from the CPU 101, the switching selector 109 switches a routing table to be used for system operation from the routing table 110 to the routing table 111.

The CPU 101 has a cache 117. In the same manner, the CPU 102 has a cache 118, the CPU 103 has a cache 119, and the CPU 104 has a cache 120. The cache 117 is a high-speed memory with a small capacity for filling the gap of speeds of the CPU 101 and the main memory 116. In the same manner, the cache 118 is a high-speed memory with a small capacity for filling the gap of speeds of the CPU 102 and the main memory 116. The cache 119 is a high-speed memory with a small capacity for filling the gap of speeds of the CPU 103 and the main memory 116. The cache 120 is a high-speed memory with a small capacity for filling the gap of speeds of the CPU 104 and the main memory 116.

Also, the information processing apparatus 100 has a partitioning mechanism. The partitioning mechanism is one of mechanisms to increase flexibility of system operation, and is a mechanism that divides a system in one processing apparatus into a plurality of independent systems. The information processing apparatus 100 is allowed to activate a plurality of independent systems, namely, partitions.

In the present embodiment, the information processing apparatus 100 activates two independent systems, namely, a partition 1 and a partition 2. In the present embodiment, the CPUs 101 and 103 are allocated to the partition 1, and the CPUs 102 and 104 are allocated to the partition 2.

In the present embodiment, it is assumed that a system change is carried out to the information processing apparatus 100 by removing the CPU 103 pertaining to the partition 1 from the information processing apparatus 100. The CPU 101 pertaining to the same partition as that of the CPU 103 issues an instruction to switch the routing tables 110 and 111. On the basis of the switching instruction from the CPU 101, the switching selector 109 switches a routing table to be used for system operation from the routing table 110 to the routing table 111. And the MMB 105 has information on the system configuration. The CPU pertaining to the same partition as that of the CPU to be removed issues a switching instruction of the routing tables so that the information processing apparatus 100 is allowed to update the routing table 111 with high reliability. This is because the risk of system malfunction can be reduced more if a CPU pertaining to the same partition as that of a CPU to be removed issues a switching instruction of the routing tables.

### [3. Flowchart of switching routing tables 110 and 111]

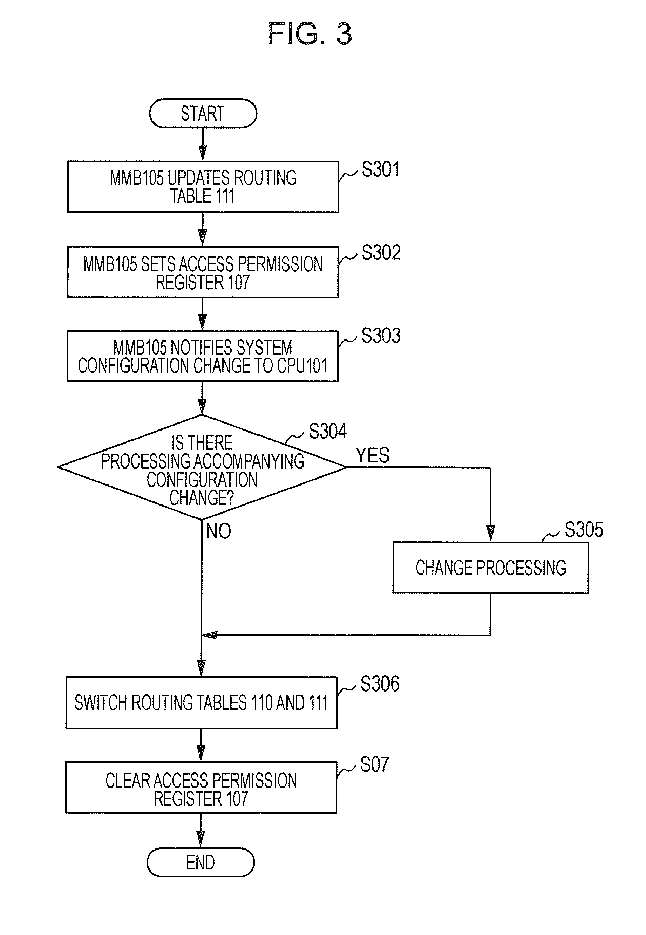

Next, a description will be given of a procedure of switching the routing tables 110 and 111 in an information processing apparatus 100 according to the present embodiment. FIG. 3 is a flowchart of switching the routing tables 110 and 111 according to the present embodiment. The flowchart in FIG. 3 also illustrates a switching procedure in the case of removing the CPU 103 from the information processing apparatus 100.

In the case of removing the CPU 103 from the information processing apparatus 100, the MMB 105 updates the routing table 111, which has not been used by the system operation (step S301). The MMB 105 writes to the routing table 111 that the CPU 103 is to be removed so as to update the routing table 111.

FIG. 4 illustrates the routing table 110, and FIG. 5 illustrates the routing table 111. As illustrated in FIG. 4 and FIG. 5, the routing tables 110 and 111 are tables indicating corresponding relationships between destination nodes and routing ports. The MMB 105 updates the corresponding relationship between the CPU 103, which is a destination node in the routing table 111, and the routing port 113. That is to say, before updating the routing table 111, the routing table 111 indicates a relationship in which the CPU 101 is connected to the port 112, the CPU 102 is connected to the port 114, the CPU 103 is connected to the port 113, and the CPU 104 is connected to the port 105. And the MMB 105 updates the routing table 111 to include information indicating that the CPU 103 is not connected to the port 113 in response to the removal of the CPU 103. In this regard, FIG. 5 illustrates the routing table 111 table after the MMB105 has updated the table.

The MMB 105 sets a flag identifying a CPU that issues a switching instruction to the switching selector 109 in the access permission register 107 (step S302). In the following, this flag is also called "flag information". FIG. 6 illustrates flag information 600 according to the present embodiment. The flag information 600 includes 2 bits, namely, a flag for the partition 1 and a flag for the partition 2. If a flag is"1", the access determination unit 108 permits the CPU in the partition corresponding to the flag whose value is "1" to access the switching selector 109. In the example in FIG. 6, the partition 1 is set to a flag "1", and the partition 2 is set to a flag "0". Accordingly, the CPU 101 pertaining to the partition 1 is allowed to access the switching selector 109.

In the present embodiment, the number of CPUs pertaining to the partition 1 and the partition 2 are two, respectively, and thus a CPU that is allowed to access the switching selector 109 is distinguished for each partition. Of course, the present embodiment is not limited to this, and thus a flag indicating access permission as flag information may be allocated for each CPU in the information processing apparatus 100. In this regard, it is possible for the CPUs 101, 102, and 104 to only reset the flag information 600 in the access permission register 107. In the present embodiment, the CPU 103 is removed from the information processing apparatus 100. Accordingly, the MMB 105 sets the flag of the register 601 for the partition 1 to "1", and sets the flag of the register 602 for the partition 2 to "0". Thereby, the CPU 101 is permitted to access the switching selector 109.

The MMB 105 notifies a system configuration change to the CPU 101 pertaining to the partition 1 whose system configuration is to be changed (step S303). That is to say, the MMB 105 notifies the CPU 101 that the system of the partition 1 is to be changed with the removal of the CPU 103.

The CPU 101 determines whether there is change processing needed to be performed with a system change of the partition 1 (step S304).

If the CPU 101 has determined that there is change processing needed to be performed along with a system change of the partition 1 (step S304 YES), the CPU 101 performs the change processing (step S305). Specifically, the change processing performed by the CPU 101 is transfer processing of the data in the cache memory 119 of the CPU 103 to the main memory 116. The above-described change processing is performed in order to avoid data loss caused by the removal of the CPU 103. And the CPU 101 instructs the switching selector 109 to switch from the routing table 110 to the routing table 111. And by the switching instruction from the CPU 101, the switching selector 109 switches a routing table to be used for system operation of the information processing apparatus 100 from the routing table 110 to the routing table 111 (step S306).

Here, the access determination unit 108 refers to the flag information 600 of the access permission register 107, and permits the CPU 101 to issue a switching instruction to the switching selector 109.

If the CPU 101 has determined that there is not change processing needed to be performed along with a system change of the partition 1 (step S304 NO), the CPU 101 does not perform the change processing, and instructs the switching selector 109 to switch from the routing table 110 to the updated routing table 111. And by the switching instruction from the CPU 101, the switching selector 109 switches a routing table to be used for system operation of the information processing apparatus 100 from the routing table 110 to the routing table 111 (step S306).

And the CPU 101 resets, namely, clears the flag information 600 of the access permission register 107 (step S307). Since the flag information 600 is cleared, the CPU 101 further performs switching of the routing tables 110 and 111, etc., so as to avoid the system malfunctioning of the information processing apparatus 100. The CPU 101 changes the flag of the register 601 for the partition 1 in the flag information 600 to "0". In this regard, the change of the flag information 600 of the access permission register 107 allowed by the CPU 101 is only resetting the flag. This is a preventive measure taken in order not to allow the CPUs 101, 102, 103, and 104 to change the contents of the access permission register 107, and not to issue a switching instruction independently to the switching selector 109.

In the information processing apparatus 100 according to the present embodiment, the MMB 105 updates the routing table 111, and the CPU 101 instructs the switching selector 109 to switch from the routing table 110 to the updated routing table 111. The information processing apparatus 100 is allowed to efficiently change the routing tables 110 and 111 in the crossbar 106 in accordance with the removal of the CPU 103. That is to say, it is possible to reduce the number of communications between the MMB 105 and the CPU 101 to one notification of the system configuration change from the MMB 105 to the CPU 101. Also, the CPU 101 of the partition 1, to which the CPU 103 has been pertaining, issues a switching instruction of the routing tables 110 and 111, and thus it is possible to change the system of the information processing apparatus without influencing the partition 2, which is another partition.

In this regard, in the present embodiment, the MMB 105 updates only the routing table 111 in accordance with the removal of the CPU 103. However, it may be configured such that the MMB 105 updates both of the routing tables 110 and 111. Also, in the present embodiment, a switching procedure in the case of removing a CPU is illustrated. However, it is possible to perform the same processing also in the case of attaching a CPU.

### Reference Signs List

- 100...: information processing apparatus
- 101...: CPU
- 102...: CPU
- 103...: CPU
- 104...: CPU
- 105...: MMB
- 106...: crossbar
- 107...: access permission register
- 108...: access determination unit
- 109...: switching selector
- 110...: routing table
- 111...: routing table
- 112...: port
- 113...: port
- 114...: port
- 115...: port
- 116...: main memory
- 117...: cache
- 118...: cache
- 119...: cache
- 120...: cache

## Claims

1. A method of switching internal settings in an information processing apparatus including a plurality of processors, a crossbar switch connected to the plurality of processors and having a first routing table and a second routing table used for routing between the plurality of processors and an external apparatus, and a management unit managing the plurality of processors, the method comprising:
performing, by the plurality of processors, data communication with the external apparatus using the first routing table;
when a configuration of the information processing apparatus is changed, updating, by the management unit, configuration information in the second routing table, and instructing, by the management unit, any one of the plurality of processors to switch the updated second routing table and the first routing table; and
switching, by the processor instructed by the management unit, a routing table to be used for data communication from the first routing table to the updated second routing table.

2. The method of switching according to claim 1, further comprising:
setting a flag identifying a processor switching from the first routing table to the second routing table in a register in the information processing apparatus; and
switching, by the processor identified by the flag, from the first routing table to the second routing table.

3. The method of switching according to claim 2,
wherein, after the processor instructed by the management unit has switched from the first routing table to the second routing table, the processor instructed by the management clears the flag set in the register.

4. The method of switching according to claim 1,
wherein, when the configuration change of the information processing apparatus leads to removing at least one processor among the plurality of processors from the information apparatus, the management unit notifies update of the routing table to a processor not to be removed, and the processor not to be removed stores data held in the processor to be removed into a memory in the information processing apparatus.

5. An information processing apparatus performing data communication with an external apparatus, comprising:
a plurality of processors;
a crossbar switch including a first routing table and a second routing table used for routing between the plurality of processors and the external apparatus and storing configuration information of the information processing apparatus, the crossbar switch relaying data communication between the plurality of processors and the external apparatus by using the first routing table or the second routing table; and
a management unit updating configuration information stored in a routing table being not used for operation of the information processing apparatus out of the first routing table and the second routing table at the time of changing a configuration of the information processing apparatus, the management unit instructing any one of the processors to switch between the updated routing table and the first routing table.

6. The information processing apparatus according to claim 5,
wherein the configuration information is information indicating a corresponding relationship between the processors and ports of the crossbar switch to which the processors are connected.

7. The information processing apparatus according to claim 5, further comprising:
a selector switching between the first routing table and the second routing table; and
a permission-information storage unit storing information indicating a processor accessible to the selector,
wherein the management unit updates information stored in the permission-information storage unit, and sets a processor accessible to the selector, and
the processor set as accessible to the selector instructs the selector to switch the routing tables.

8. The information processing apparatus according to claim 7,
wherein the information processing apparatus is divided into a plurality of partitions individually including one or more of the processors, and
when a configuration change is performed on any one of the partitions, the management unit updates the information stored in the permission-information storage unit such that only a processor pertaining to the partition on which the configuration change is performed becomes accessible to the selector.

9. A method of switching internal settings in an information processing apparatus including a plurality of processors, a crossbar switch connected to the plurality of processors and having a first routing table and a second routing table used for routing between the plurality of processors and an external apparatus, and a management unit managing the plurality of processors, the method comprising:
performing, by the plurality of processors, data communication with the external apparatus using the first routing table;
preparing connection information in the second routing table such that a processor to be attached becomes unconnected to the crossbar switch with respect to the second routing table; and
when at least one processor is added to a system among the plurality of processors, switching a routing table to be used by the processor for data communication from the first routing table to the second routing table.
